(19) Europäisches Patentamt
European Patent Office
Office européen des brevets

(11) EP 4 333 150 A1

(12) EUROPEAN PATENT APPLICATION
published in accordance with Art. 153(4) EPC

(43) Date of publication:
**06.03.2024 Bulletin 2024/10**

(21) Application number: **21938913.7**

(22) Date of filing: **27.10.2021**

(51) International Patent Classification (IPC):
***H01M 10/0567*** *(2010.01)* ***H01M 10/0525*** *(2010.01)*
***H01M 4/485*** *(2010.01)* ***H01M 4/505*** *(2010.01)*
***H01M 4/525*** *(2010.01)*

(52) Cooperative Patent Classification (CPC):
Y02E 60/10

(86) International application number:
**PCT/CN2021/126575**

(87) International publication number:
**WO 2022/227450 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2021 CN 202110483270**

(71) Applicant: **Ningde Amperex Technology Limited
Ningde, Fujian 352100 (CN)**

(72) Inventors:
- **LI, Wenqiang
Ningde, Fujian 352100 (CN)**
- **XIONG, Yali
Ningde, Fujian 352100 (CN)**
- **LIU, Junfei
Ningde, Fujian 352100 (CN)**
- **ZHANG, Lilan
Ningde, Fujian 352100 (CN)**

(74) Representative: **Klunker IP
Patentanwälte PartG mbB
Destouchesstraße 68
80796 München (DE)**

# (54) ELECTROLYTIC SOLUTION, ELECTROCHEMICAL DEVICE, AND ELECTRONIC DEVICE

(57) This application discloses an electrolyte, an electrochemical apparatus, and an electronic apparatus. The electrolyte of this application includes ethyl propionate, propyl propionate, ethylene carbonate, and propylene carbonate, where based on a total mass of the electrolyte, a mass percentage of ethyl propionate is a%, a mass percentage of propyl propionate is b%, a mass percentage of ethylene carbonate is c%, and a mass percentage of propylene carbonate is d%, where $20 \leq a+b \leq 50$, $0<c/d<1$, and $15 \leq c+d \leq 50$. The electrolyte provided in this application can significantly improve floating charge performance of electrochemical apparatuses at high voltage.

EP 4 333 150 A1

## Description

### CROSS-REFERENCE TO RELATED APPLICATIONS

This application claims priority to Chinese Patent Application No. 202110483270.2, filed on April 30, 2021 and entitled "ELECTROLYTE, ELECTROCHEMICAL APPARATUS, AND ELECTRONIC APPARATUS", which is incorporated herein by reference in its entirety.

### TECHNICAL FIELD

This application relates to an electrolyte, and an electrochemical apparatus and electronic apparatus including the electrolyte.

### BACKGROUND

With the rapid development of smart phones and consumer electronics, rigorous requirements have been placed on energy density of lithium-ion batteries. Increasing dielectric withstand voltage of lithium-ion batteries is an important means to increase the energy density. The increase in voltage will bring more side reactions and safety problems, especially in floating charge and cycling performance. How to reduce side reactions of high voltage and increase safety voltage window of lithium-ion batteries has become a major challenge in the industry.

### SUMMARY

In view of the problems existing in the prior art, this application provides an electrolyte and an electrochemical apparatus and electronic apparatus including the electrolyte. The electrolyte provided in this application can significantly improve floating charge performance of electrochemical apparatuses at high voltage.

According to a first aspect, this application provides an electrolyte, where the electrolyte includes ethyl propionate, propyl propionate, ethylene carbonate, and propylene carbonate, and based on a total mass of the electrolyte, a mass percentage of ethyl propionate is a%, a mass percentage of propyl propionate is b%, a mass percentage of ethylene carbonate is c%, and a mass percentage of propylene carbonate is d%, where $20 \leq a+b \leq 50$, $0 < c/d < 1$, and $15 \leq c+d \leq 50$.

According to some embodiments of this application, $30 \leq a+b \leq 50$ and $0.1 < c/d < 0.8$.

According to some embodiments of this application, the electrolyte further includes chain carbonate, and based on the total mass of the electrolyte, a mass percentage of the chain carbonate is e%, where $5 \leq e \leq 30$.

According to some embodiments of this application, the electrolyte further includes fluoroethylene carbonate, where based on the total mass of the electrolyte, a mass percentage of fluoroethylene carbonate ranges from 0.01% to 15%.

According to some embodiments of this application, the electrolyte includes a sultone compound, and the sultone compound satisfies at least one of conditions (1) to (3): (1) a mass percentage of the sultone compound in the electrolyte ranges from 0.01% to 10%; (2) the sultone compound includes a compound of formula I:

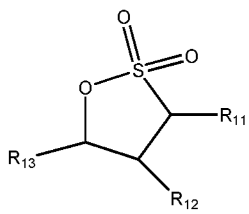

formula I

where $R_{11}$, $R_{12}$, and $R_{13}$ are each independently selected from hydrogen, halogen, hydrocarbyl, or halogen-containing hydrocarbyl; and

(3) the sultone compound includes: at least one of

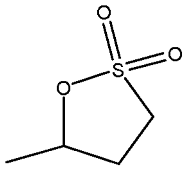 formula I-1, 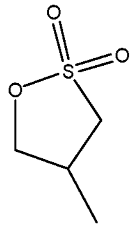 formula I-2,

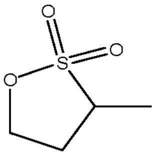 formula I-3, 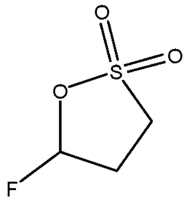 formula I-4, 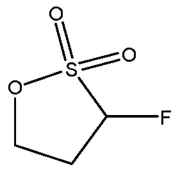 formula I-5, or

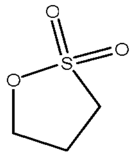 formula I-6.

According to some embodiments of this application, the electrolyte includes fluoroethylene carbonate and a sultone compound, and based on the total mass of the electrolyte, a mass percentage of fluoroethylene carbonate is $W_1$%, and a mass percentage of the sultone compound is $W_2$%, where $W_1$ and $W_2$ satisfy at least one of conditions (i) to (iii): (i) $0.01 \le W_1 \le 15$, and $0.01 \le W_2 \le 10$; (ii) $2 \le W_1 + W_2 \le 15$; and (iii) $1 < W_1/W_2 \le 15$.

According to some embodiments of this application, the electrolyte includes a multi-nitrile compound, and the multi-nitrile compound satisfies at least one of conditions (4) and (5): (4) a mass percentage of the multi-nitrile compound in the electrolyte ranges from 0.001% to 10%; and (5) the multi-nitrile compound includes a dinitrile compound and a trinitrile compound, where based on the total mass of the electrolyte, a mass percentage of the dinitrile compound is $W_3$%, and a mass percentage of the trinitrile compound is $W_4$%, where $2 \le W_3 + W_4 \le 9$ and/or $1 < W_3/W_4 \le 15$. In some embodiments, the multi-nitrile compound includes at least one of malononitrile, succinonitrile, glutaronitrile, adiponitrile, pimelic nitrile, 1,4-dicyano-2-butene, ethylene glycol bis(propionitrile) ether,

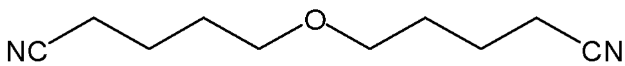 (formula II-1), 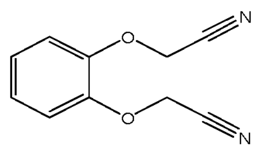

(formula II-2), 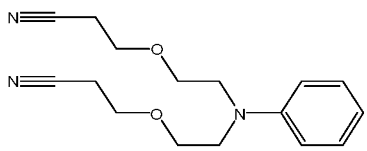 (formula II-3),

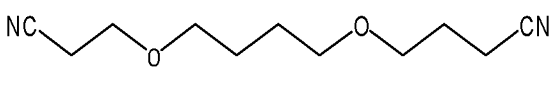 (formula II-4),

1,3,6-hexane trinitrile, 1,2,3-malononitrile, 3,3'-[[2-[(2-cyanoethoxy)methyl]-2-ethyl-1,3-propanediyl]bis(oxy)]bis-propionitrile, 2,2,2-azatriacetonitrile, ethylene-1,1,2-tricarbonitrile, tris(2-cyanoethyl)amine, tris(2-cyanoethyl)phosphine, and 1,2,3-tris(2-cyanooxy)propane.

According to some embodiments of this application, the electrolyte includes a boron-containing lithium salt, and the boron-containing lithium salt satisfies at least one of conditions (6) and (7): (6) a mass percentage of the boron-containing lithium salt in the electrolyte ranges from 0.01% to 1%; and (7) the boron-containing lithium salt includes at

least one of lithium oxalate borate, lithium difluorooxalate borate, lithium tetrafluoroborate, or lithium borate.

According to some embodiments of this application, the electrolyte includes an alkenyl sulfone compound, and the alkenyl sulfone compound satisfies at least one of conditions (8) to (10): (8) a mass percentage of the alkenyl sulfone compound in the electrolyte ranges from 0.001% to 5%; and (9) the alkenyl sulfone compound includes a compound of formula III:

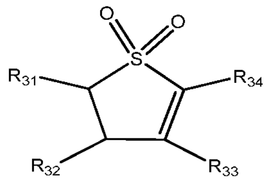 formula III

where $R_{31}$, $R_{32}$, $R_{33}$, and $R_{34}$ are each independently selected from hydrogen, halogen, hydrocarbyl, or halogen-containing hydrocarbyl; and

(10) the alkenyl sulfone compound includes

at least one of 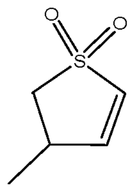 formula III-1, 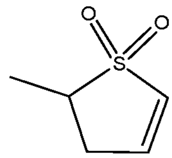 formula III-2,

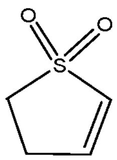 formula III-3, 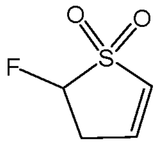 formula III-4, 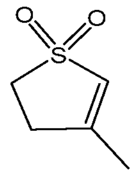 formula III-5,

or

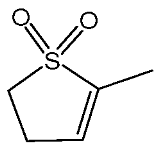 formula III-6.

According to a second aspect, this application further provides an electrochemical apparatus, where the electrochemical apparatus includes a positive electrode, a negative electrode, a separator, and the electrolyte according to the first aspect.

According to some embodiments of this application, the positive electrode includes a positive electrode active material, and the positive electrode active material satisfies at least one of conditions (11) to (14): (11) the positive electrode active material includes elements Li, O, and at least one element selected from Co, Fe, P, Ni, or Mn; (12) the positive electrode active material includes element M, and element M includes at least one of Al, Mg, Ti, Zr, Y, or La, and based on a total mass of the positive electrode active material, a concentration of element M ranges from 200 ppm to 12000 ppm; (13) a specific surface area of the positive electrode active material ranges from 0.1 $m^2/g$ to 0.3 $m^2/g$; and (14) $D_v50$ of the positive electrode active material ranges from 10 μm to 30 μm. According to a third aspect, this application provides an electronic apparatus, where the electronic apparatus includes the electrochemical apparatus described in the second aspect.

The electrolyte of this application includes ethyl propionate, propyl propionate, ethylene carbonate, and propylene carbonate in a specific content range and a ratio relationship. This can significantly improve floating charge performance of electrochemical apparatuses at high voltage.

## DESCRIPTION OF EMBODIMENTS

To make the objectives, technical solutions, and advantages of this application clearer, the following clearly and completely describes the technical solutions in this application with reference to the embodiments. Apparently, the described embodiments are some but not all of the embodiments of this application. The embodiments described herein are illustrative in nature and used to provide a basic understanding of this application. The embodiments of this application shall not be construed as a limitation on this application. All other embodiments obtained by those skilled in the art based on the technical solutions provided by this application and the given embodiments without creative efforts shall fall within the protection scope of this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each point or individual value may act as its own lower limit or upper limit to be combined with any other point or individual value or combined with any other lower limit or upper limit to form a range not expressly recorded.

In the descriptions of this specification, "more than" or "less than" is inclusive of the present number unless otherwise specified.

Unless otherwise specified, terms used in this application have well-known meanings generally understood by persons skilled in the art. Unless otherwise specified, numerical values of parameters mentioned in this application may be measured by using various measurement methods commonly used in the art (for example, testing may be performed by using a method provided in the embodiments of this application).

A list of items connected by the terms "at least one of", "at least one piece of", "at least one kind of", or the like may mean any combination of the listed items. For example, if items A and B are listed, the phrase "at least one of A and B" means only A; only B; or A and B. In another example, if items A, B, and C are listed, the phrase "at least one of A, B, and C" means only A, only B, only C, A and B (excluding C), A and C (excluding B), B and C (excluding A), or all of A, B, and C. The item A may contain a single constituent or a plurality of constituents. The item B may contain a single constituent or a plurality of constituents. The item C may contain a single constituent or a plurality of constituents.

I. Electrolyte

This application provides an electrolyte, where the electrolyte includes ethyl propionate, propyl propionate, ethylene carbonate, and propylene carbonate, and based on a total mass of the electrolyte, a mass percentage of ethyl propionate is a%, a mass percentage of propyl propionate is b%, a mass percentage of ethylene carbonate is c%, and a mass percentage of propylene carbonate is d%, where $20 \le a+b \le 50$, $0 < c/d < 1$, and $15 \le c+d \le 50$. The electrolyte of this application contains ethyl propionate and propyl propionate. Ethyl propionate and propyl propionate have low viscosity, so that transmission impedance of lithium ions is reduced, and a risk of lithium ion precipitation during charging and discharging is reduced, thereby reducing occurrence and accumulation of side reactions and improving cycling performance. In addition, ethyl propionate and propyl propionate have low oxidation resistance. For an electrochemical apparatus such as a lithium-ion battery in a floating charge condition, ethyl propionate and propyl propionate are oxidized at the positive electrode under persistent high-voltage conditions. Reaction products will be enriched at the positive electrode to prevent the positive electrode material from reacting with other solvents, improving the floating charge performance of the electrochemical apparatus. In addition, a concentration of ethylene carbonate is lower than that of propylene carbonate, enhancing stability of a cyclic carbonate solvent at high voltage. Both ethylene carbonate and propylene carbonate may provide good solvation with lithium salt. However, ethylene carbonate is less stable than propylene carbonate at persistent high voltage, and is prone to side reactions and gas generation. Under the condition that an amount of ethylene carbonate is lower than that of propylene carbonate, a concentration of lithium salt around ethylene carbonate increases, enhancing stability of ethylene carbonate and improving floating performance of the electrochemical apparatus.

According to some embodiments of this application, $25 \le a+b \le 50$ and $0.1 < c/d < 0.8$. According to some embodiments of this application, $30 \le a+b \le 50$ and $0.1 < c/d < 0.8$.

In some embodiments, a+b may be 20, 25, 30, 35, 40, 45, or 50, or in a range of any two of these values. In some embodiments, an upper limit of a+b is selected from 50, 45, and 40, and a lower limit of a+b is selected from 25, 30, and 35. Low concentrations of ethyl propionate and propyl propionate have no significant effect on reduction of viscosity of the electrolyte, and cannot effectively improve lithium precipitation characteristics of the electrochemical apparatus. High concentrations of ethyl propionate and propyl propionate will cause side reactions at the positive electrode due to their instability at a positive electrode interface, and accumulation of these side products will affect interface kinetic performance of the electrochemical apparatus.

According to some embodiments of this application, a may range from 3 to 40. In some embodiments, a may

be 3, 6, 9, 12, 15, 17, 20, 23, 25, 27, 30, 35, or 40, or in a range of any two of these values.

According to some embodiments of this application, b may range from 5 to 40. In some embodiments, b may be 5, 7, 9, 12, 15, 17, 20, 23, 25, 27, 30, 35, or 40, or in a range of any two of these values.

According to some embodiments of this application, c/d may be 0.2, 0.4, 0.6, 0.8, or 0.9. Because of its high interface constant, cyclic carbonate such as ethylene carbonate (EC for short) and propylene carbonate (PC for short) has good solubility for lithium salts and additives. A dielectric constant of ethylene carbonate is twice as high as that of propylene carbonate, and therefore adding more ethylene carbonate will significantly improve stability of the electrolyte system. However, with the increase of voltage, ethylene carbonate is easy to decompose and produce gas due to its poor tolerance to voltage. A concentration of ethylene carbonate is lower than that of propylene carbonate, enhancing stability of a cyclic carbonate solvent at high voltage. Both ethylene carbonate and propylene carbonate may provide good solvation with lithium salt. However, ethylene carbonate is less stable than propylene carbonate at persistent high voltage, and is prone to side reactions and gas generation. Under the condition that an amount of ethylene carbonate is lower than that of propylene carbonate, a concentration of lithium salt around ethylene carbonate increases, enhancing stability of ethylene carbonate and improving floating performance of the electrochemical apparatus. In some embodiments, c+d may be 15, 20, 25, 30, 35, 40, 45, or 50, or in a range of any two of these values.

According to some embodiments of this application, the electrolyte further includes chain carbonate, and a mass percentage of the chain carbonate is e%, where $5 \leq e \leq 30$. According to some embodiments of this application, e may be 5, 7, 13, 15, 17, 20, 21, 23, 25, 27, or 29, or in a range of any two of these values. Under the influence of solvation of lithium hexafluorophosphate, the chain carbonate is prone to decomposition and gas generation if added in a large amount, thereby affecting electrical performance of the electrochemical apparatus. In some embodiments, the chain carbonate is selected from at least one of diethyl carbonate, ethyl methyl carbonate, ethyl methyl carbonate, or fluoro ethyl methyl carbonate.

According to some embodiments of this application, the electrolyte further includes fluoroethylene carbonate. Fluoroethylene carbonate can form a stable organic protective film on a surface of the active material, and the organic protective film does not break with shrinkage and swelling of the active material in a charging and discharging process of the electrochemical apparatus, thereby significantly improving cycling performance of the electrochemical apparatus. In some embodiments of this application, based on the total mass of the electrolyte, a mass percentage of fluoroethylene carbonate ranges from 0.01% to 15%. According to some embodiments of this application, a mass percentage of fluoroethylene carbonate is 0.05%, 0.5%, 1%, 2%, 3%, 4%, 5%, 6%, 7%, 8%, 9%, 10%, 11%, 12%, 13%, or 14%, or in a range of any two of these values. In some embodiments of this application, a mass percentage of fluoroethylene carbonate ranges from 3% to 10%.

According to some embodiments of this application, the electrolyte includes a sultone compound. Adding the sultone compound to the electrolyte can form a protective film containing sulfonic acid groups on the surface of the active material. The sulfonic acid groups have a good tolerance to high temperature and can reduce side reactions at high temperatures, thereby improving cycling and high-temperature high-humidity performance of the electrochemical apparatus.

According to some embodiments of this application, a mass percentage of the sultone compound in the electrolyte ranges from 0.01% to 10%, for example, is 0.05%, 0.5%, 1%, 2%, 3%, 4%, 5%, 6%, 7%, 8%, 9%, or 10%, or in a range of any two of these values. The sultone compound is prone to ring-opening reaction, forming a film at each of the positive and negative electrodes, thereby improving high-temperature resistance of protective films on positive and negative electrode interfaces. As an amount of the sultone compound increases, film-forming effect increases, and the formed film increasingly blocks migration of lithium ions, so that interface impedance of the electrochemical apparatus increases, affecting performance of the electrochemical apparatus. In some embodiments of this application, an upper limit of a range of the mass percentage of the sultone compound in the electrolyte of this application is selected from 10%, 8%, 7%, or 5%, and a lower limit is selected from 1%, 2%, 3%, or 4%. In some embodiments, the mass percentage of the sultone compound in the electrolyte ranges from 0.5% to 5%.

According to some embodiments of this application, the sultone compound includes a compound of formula I:

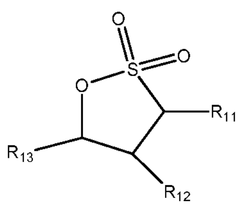

formula I

where $R_{11}$, $R_{12}$, and $R_{13}$ are each independently selected from hydrogen, halogen, hydrocarbyl, or halogen-containing hydrocarbyl.

According to some embodiments of this application, $R_{11}$, $R_{12}$, and $R_{13}$ are each independently selected from a $C_1$-$C_6$ alkyl group, a $C_2$-$C_6$ alkenyl group, a $C_2$-$C_6$ alkynyl group, a halogen-containing $C_1$-$C_6$ alkyl group, a halogen-containing $C_2$-$C_6$ alkenyl group, or a halogen-containing $C_2$-$C_6$ alkynyl group.

According to some embodiments of this application, the $C_1$-$C_6$ alkyl group is methyl, ethyl, propyl, butyl, pentyl, or the like. According to some embodiments of this application, the $C_2$-$C_6$ alkenyl group is vinyl, propenyl, or butenyl. According to some embodiments of this application, the $C_2$-$C_6$ alkynyl group is ethynyl, propynyl, or butynyl. The halogen mentioned in this application refers to F, Cl, Br, or I.

According to some embodiments of this application, the sultone compound includes at least one of

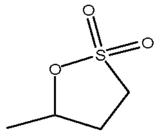 formula I-1, 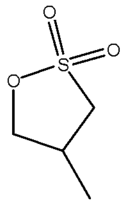 formula I-2,

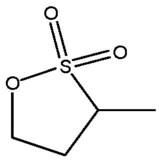 formula I-3, 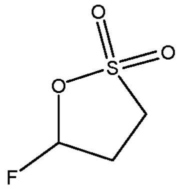 formula I-4, 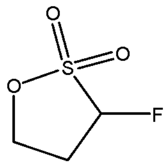 formula I-5, or

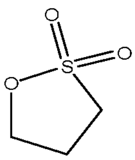 formula I-6.

According to some embodiments of this application, the electrolyte includes fluoroethylene carbonate and a sultone compound, and based on the total mass of the electrolyte, a mass percentage of fluoroethylene carbonate is $W_1$%, and a mass percentage of the sultone compound is $W_2$%, where $0.01 \le W_1 \le 15$, and $0.01 \le W_2 \le 10$.

According to some embodiments of this application, the electrolyte includes fluoroethylene carbonate and a sultone compound, and based on the total mass of the electrolyte, a mass percentage of fluoroethylene carbonate is $W_1$%, and a mass percentage of the sultone compound is $W_2$%, where $2 \le W_1+W_2 \le 15$.

According to some embodiments of this application, the electrolyte includes fluoroethylene carbonate and a sultone compound, and based on the total mass of the electrolyte, a mass percentage of fluoroethylene carbonate is $W_1$%, and a mass percentage of the sultone compound is $W_2$%, where $1 < W_1/W_2 \le 15$. Under the condition that fluoroethylene carbonate and the sultone compound satisfy the foregoing ranges, the electrochemical apparatus can obtain better cycling performance and high-temperature storage performance.

According to some embodiments of this application, the electrolyte includes a multi-nitrile compound. The multi-nitrile compound can reduce reaction activity of transition metals at the positive electrode, to improve the high-voltage floating charge of the electrochemical apparatus. According to some embodiments of this application, a mass percentage of the multi-nitrile compound in the electrolyte ranges from 0.001% to 10%, for example, is 0.05%, 0.5%, 1%, 2%, 3%, 4%, 5%, 6%, 7%, 8%, 9%, or 10%, or in a range of any two of these values.

According to some embodiments of this application, the multi-nitrile compound includes a dinitrile compound. In some embodiments of this application, the dinitrile compound includes at least one of malononitrile, succinonitrile, glutaronitrile, adiponitrile, pimelic nitrile, 1,4-dicyano-2-butene, ethylene glycol bis(propionitrile) ether, 1,5-dicyano pentane, 1,6-dicyanohexane, 1,7-dicyanoheptane, 1,8-dicyanooctane, 1,9-dicyanononane, 1,10-dicyano decane, 1,12-dicyanododecane, tetramethylsuccinonitrile, 2-methylglutaronitrile, 2,4-dimethylglutaronitrile, 2,2,4,4-tetramethylglutaronitrile, 1,4-dicyanopentane, 1,4-dicyanopentane, 2,5-dimethyl-2,5-hexane dicarbonitrile, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,5-dioxa-pimelonitrile, 1,4-bis(cyanoethoxy)butane, ethylene glycol bis(2-cyanoethyl) ether, diethylene glycol bis(2-cyano Ethyl) ether, triethylene glycol bis(2-cyanoethyl) ether, tetraethylene glycol bis(2-cyanoethyl) ether, 3,6,9,12,15,18-hexaoxeicosanic acid dinitrile, 1,3-bis(2-cyanoethoxy)propane, 1,4-bis(2-cyanoethoxy)butane, 1,5-bis(2-cyanoethoxy)pentane, ethylene glycol bis(4-cyanobutyl) ether, 1,4-dicyano-2-methyl-2-butene, 1,4-dicyano-2-ethyl-2-butene, 1,4-dicyano-2,3-dimethyl-2-butene, 1,4-dicyano-2,3 -diethyl-2-butene, 1,6-dicyano-3 -hexene, 1,6-dicyano-2-methyl-3-hexene, 1,6-dicyano-2-methyl-5-methyl-3-hexenee,

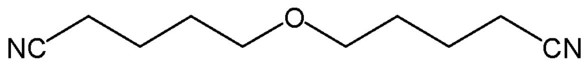 (formula II-1), 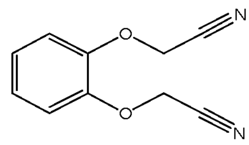

(formula II-2), 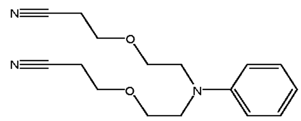 (formula II-3), or

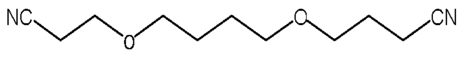 (formula II-4).

According to some embodiments of this application, the dinitrile compound includes at least one of malononitrile, succinonitrile, glutaronitrile, adiponitrile, pimelic nitrile, or 1,4-dicyano-2-butene, and at least one of ethylene glycol bis(propionitrile) ether,

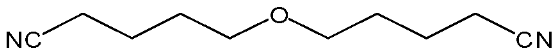 (formula II-1), 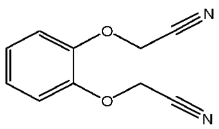 (formula II-2), 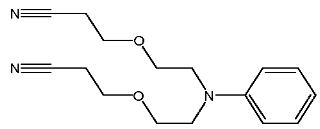 (formula II-3),

or

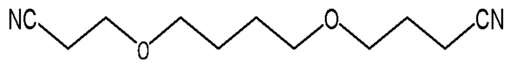 (formula II-4).

According to some embodiments of this application, a mass percentage of the dinitrile compound in the electrolyte ranges from 0.001% to 10%. Under the condition of a low percentage, an effective composite protective film cannot be formed; under the condition of a high percentage, the dinitrile compound cannot be consumed in time, and remaining substances will continue to cause side reactions later, which will affect high-temperature storage performance of the electrochemical apparatus. In some embodiments of this application, an upper limit of a range of the mass percentage of the dinitrile compound in the electrolyte of this application is selected from 9%, 8%, 7%, or 6%, and a lower limit is selected from 5%, 3%, 2%, 1%, 0.5%, or 0.3%. In some embodiments, the mass percentage of the dinitrile compound in the electrolyte ranges from 0.5% to 5%.

According to some embodiments of this application, the multi-nitrile compound includes a trinitrile compound. In some embodiments of this application, the trinitrile compound is selected from at least one of 1,3,6-hexane trinitrile, 1,2,3-malononitrile, 3,3'-[[2-[(2-cyanoethoxy)methyl]-2-ethyl-1,3-propanediyl]bis(oxy)]bis-propionitrile, 2,2,2-azatriacetonitrile, ethylene-1,1,2-tricarbonitrile, tris(2-cyanoethyl)amine, tris(2-cyanoethyl)phosphine, or 1,2,3-tris(2-cyanooxy)propane.

According to some embodiments of this application, a mass percentage of the trinitrile compound in the electrolyte ranges from 0.01% to 7%. Different nitriles exhibit slightly different effects on improving high-voltage floating charge due to their different structures, and the trinitrile compound exhibits a more significant effect on improving high-voltage floating charge. However, the trinitrile compound has a great influence on the kinetics. Under the condition that an excessive amount of trinitrile compound is added, lithium precipitation may be caused at the negative electrode interface, which has an opposite effect. According to some embodiments, an upper limit of a range of the mass percentage of the trinitrile compound in the electrolyte of this application is selected from 7%, 6%, 5%, or 4%, and a lower limit is

selected from 0.5%, 1%, 2%, or 3%. In some embodiments, the mass percentage of the trinitrile compound in the electrolyte ranges from 0.1% to 5%.

According to some embodiments of this application, the multi-nitrile compound includes a dinitrile compound and a trinitrile compound, where based on the electrolyte, a mass percentage of the dinitrile compound is $W_3$%, and a mass percentage of the trinitrile compound is $W_4$%, where $2 \leq W_3+W_4 \leq 9$.

According to some embodiments of this application, the multi-nitrile compound includes a dinitrile compound and a trinitrile compound, where based on the total mass of the electrolyte, a mass percentage of the dinitrile compound is $W_3$%, and a mass percentage of the trinitrile compound is $W_4$%, where $1 < W_3/W_4 \leq 15$. When the electrolyte includes both the dinitrile compound and the trinitrile compound, and the dinitrile compound and the trinitrile compound are within the foregoing ranges, both high-temperature storage performance and high-voltage floating charge effect of the electrochemical apparatus can be improved.

According to some embodiments of this application, the multi-nitrile compound includes a dinitrile compound and a trinitrile compound, the dinitrile compound includes at least one of malononitrile, succinonitrile, glutaronitrile, adiponitrile, pimelic nitrile, or 1,4-dicyano-2-butene, and at least one of ethylene glycol bis(propionitrile) ether,

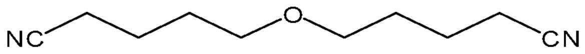

(formula II-1), 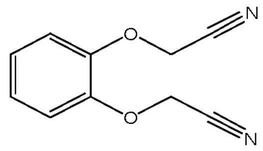 (formula II-2), 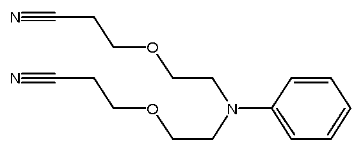

(formula II-3), or 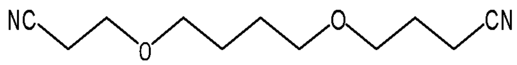 (formula II-4),

and the trinitrile compound is selected from at least one of 1,3,6-hexane trinitrile, 3,3'-[[2-[(2-cyanoethoxy)methyl]-2-ethyl-1,3-propanediyl]bis(oxy)]bis-propionitrile, 2,2,2-azatriacetonitrile, ethylene-1,1,2-tricarbonitrile, tris(2-cyanoethyl)amine, or 1,2,3-tris(2-cyanooxy)propane.

According to some embodiments of this application, the electrolyte includes a boron-containing lithium salt. The oxygen release of a positive electrode material during cycling is an important factor affecting degradation of the positive electrode material during cycling. Higher activity of the released oxygen will accelerate decomposition of the electrolyte, and decomposition products of the electrolyte will further damage a surface structure of the positive electrode. Such reciprocation will lead to vicious acceleration. The boron-containing lithium salt has an inhibitory effect on the active oxygen of the positive electrode material due to its unique electron-deficient characteristics. According to some embodiments of this application, a mass percentage of the boron-containing lithium salt in the electrolyte ranges from 0.01% to 1%, for example, is 0.05%, 0.1%, 0.2%, 0.3%, 0.4%, 0.5%, 0.6%, 0.7%, 0.8%, or 0.9%, or in a range of any two of these values. A low concentration of the boron-containing lithium salt cannot form an effective composite protective film; and a high concentration of the boron-containing lithium salt cannot be consumed in time, and remaining substances will continue to cause side reactions later, which will affect high-temperature storage performance of the electrochemical apparatus. In some embodiments of this application, the boron-containing lithium salt includes at least one of lithium oxalate borate, lithium difluorooxalate borate, lithium tetrafluoroborate, or lithium borate.

According to some embodiments of this application, the electrolyte includes an alkenyl sulfone compound. On the one hand, sulfur-containing sulfone containing unsaturated bonds can form a stable composite organic protective film at the positive electrode. On the other hand, due to the unsaturated bonds contained, it is easy to reduce at the positive electrode to form a flexible organic protective film. Therefore, contact between the active material and the electrolyte can be reduced, reducing a probability of side reactions. According to some embodiments of this application, a mass percentage of the alkenyl sulfone compound in the electrolyte ranges from 0.001% to 5%, for example, is 0.1%, 0.5%, 1.0%, 1.5%, 2.0%, 2.5%, 3.0%, 3.5%, 4.0%, 4.5%, or 5.0%, or in a range of any two of these values. In some embodiments of this application, an upper limit of a range of the mass percentage of the alkenyl sulfone compound in the electrolyte is selected from 4%, 3%, 2.5%, or 2%, and a lower limit is selected from 1%, 0.8%, 0.5%, or 0.3%. In some embodiments, the mass percentage of the alkenyl sulfone compound in the electrolyte ranges from 0.1% to 1%.

According to some embodiments of this application, the alkenyl sulfone compound includes a compound of formula III:

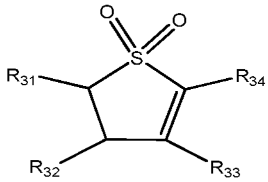

formula III,

where $R_{31}$, $R_{32}$, $R_{33}$, and $R_{34}$ are each independently selected from hydrogen, halogen, hydrocarbyl, or halogen-containing hydrocarbyl.

According to some embodiments of this application, $R_{31}$, $R_{32}$, $R_{33}$, and $R_{34}$ are each independently selected from a $C_1$-$C_6$ alkyl group, a $C_2$-$C_6$ alkenyl group, a $C_2$-$C_6$ alkynyl group, a halogen-containing $C_1$-$C_6$ alkyl group, a halogen-containing $C_2$-$C_6$ alkenyl group, or a halogen-containing $C_2$-$C_6$ alkynyl group.

According to some embodiments of this application, the $C_1$-$C_6$ alkyl group is methyl, ethyl, propyl, butyl, pentyl, or the like. According to some embodiments of this application, the $C_2$-$C_6$ alkenyl group is vinyl, propenyl, or butenyl. According to some embodiments of this application, the $C_2$-$C_6$ alkynyl group is ethynyl, propynyl, or butynyl. The halogen mentioned in this application refers to F, Cl, Br, or I.

According to some embodiments of this application, the alkenyl sulfone compound includes at least one of

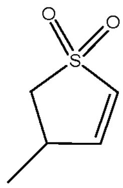

formula III-1,

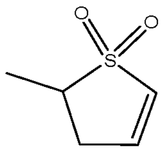

formula III-2,

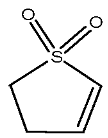

formula III-3,

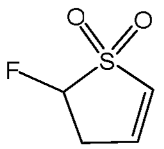

formula III-4,

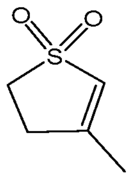

formula III-5,

or

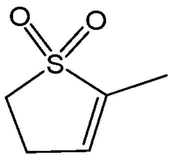

formula III-6.

According to some embodiments of this application, the electrolyte may include fluoroethers. Compared with carbonates and carboxylates, fluoroethers have better oxidation resistance and can improve voltage tolerance of a non-aqueous electrolyte.

According to some embodiments of this application, the fluoroether compound is specifically selected from at least one of the following compounds, but not limited to: desflurane, sevoflurane, fluorovinyl ether, 2,2,2-trifluoroethyl ether, bis(fluoromethyl) ether, 2,2,3,3,3-pentafluoropropyl difluoromethyl ether, 2,2-difluoroethyl trifluoromethyl ether, 1,1,2,3,3,3-pentafluoropropyl-2,2,2-trifluoroethyl ether, heptafluoropropyl 1,2,2,2-tetrafluoroethyl ether, trifluoromethyl trifluorovinyl ether, 1,2,2,2-tetrafluoroethyl trifluoromethyl ether, 1,1,2,3,3,3-pentafluoropropyl difluoromethyl ether, 1,2,2-trifluoroethyl trifluoromethyl ether, 2,2,3,3-tetrafluoropropyl difluoromethyl ether, difluoromethyl-2,2,2-trifluoroethyl ether, 1,1-difluorodimethyl ether, trifluoromethyl methyl ether, 1,1,2,2-tetrafluoroethyl ether, 1,1,2,3,3,3-hexafluoropropyl methyl ether, 1,1,3,3-tetrafluorodimethyl ether, bis(4-fluorobutyl) ether, ethyl trifluoromethyl ether, 2,2,3,3,3-pentafluoropropyl methyl ether, methyl nonafluorobutyl ether, 1,2,2,2-tetrafluoroethyl methyl ether, pentafluorodimethyl ether, 1,1,2,3,3,3-pentafluoropropyl ethyl ether, bis-(2,2-difluoroethyl) ether, ethyl perfluorobutyl ether, di-(1,2,2,2-tetrafluoroethyl) ether, 1,1,2,2-tetrafluoroethyl methyl ether, 2-fluoroethyl (methyl) ether, perfluorobutyl methyl ether, ethyl nonafluorobutyl ether, 2-perfluoropropoxy perfluoropropyl trifluorovinyl ether, 1,1,1,3,3,3-hexafluoroisopropyl methyl ether,

1H,1h,2H,3h-decafluorodipropyl ether, perfluorodiethylene glycol dimethyl ether, 2,2-difluoroethyl methyl ether, perfluoroethyl vinyl ether, perfluoro n-propyl vinyl ether, perfluoroethyl vinyl ether, allyl 2,2,3,3-tetrafluoropropyl ether, 2,2,2-trifluoroethyl ethyl ether, or perfluoro(3-butenyl vinyl ether).

According to some embodiments of this application, a mass percentage of the fluoroether compound in the electrolyte ranges from 0.1% to 20%. The fluoroether compound contains more fluorine. As the fluorine content increases, the fluoroether compound will hinder migration of lithium ions in the electrolyte, thereby increasing polarization of the electrolyte. The increase in polarization will further cause lithium precipitation at the interface in the charging process, and reduce an effect of the fluoroether compound in the non-aqueous electrolyte. In some embodiments of this application, an upper limit of a range of the mass percentage of the fluoroether compound in the electrolyte of this application is selected from 20%, 15%, 10%, or 5%, and a lower limit is selected from 1%, 2%, 3%, or 4%. According to some embodiments of this application, a mass percentage of the fluoroether compound in the electrolyte ranges from 0.5% to 10%.

According to some embodiments of this application, the lithium salt is selected from at least one of $LiPF_6$, lithium bistrifluoromethanesulfonimide $LiN(CF_3SO_2)_2$ (LiTFSI for short), lithium bis(fluorosulfonyl)imide $Li(N(SO_2F)_2)$ (LiFSI for short), LiBOB (lithium dioxalate borate), LiDFOB (lithium difluorooxalate borate), $LiPF_4C_2O_4$ (lithium tetrafluorooxalate), $LiPF_2[C_2O_4]_2$ (lithium difluorobisoxalate), lithium hexafluorocesium oxide ($LiCsF_6$), or the like. When a variety of lithium salts are selected, a mass percentage of $LiPF_6$ in the lithium salts should be greater than 50%.

II. Electrochemical apparatus

The electrochemical apparatus according to this application includes any apparatus in which electrochemical reactions take place. Specific examples of the apparatus include all kinds of primary batteries and secondary batteries. Specially, the electrochemical apparatus is a lithium secondary battery, including a lithium metal secondary battery, a lithium-ion secondary battery, a lithium polymer secondary battery, or a lithium-ion polymer secondary battery. In some embodiments, the electrochemical apparatus of this application includes a positive electrode, a negative electrode, a separator, and the electrolyte described in this application.

1. Electrolyte

The electrolyte used in the electrochemical apparatus according to this application is any one of the foregoing electrolytes in this application.

2. Positive electrode

According to some embodiments of this application, the positive electrode includes a current collector and a positive electrode active material layer provided on the current collector, and the positive electrode active material layer includes a positive electrode active material, a binder, and a conductive agent.

According to some embodiments of this application, the positive electrode active material includes Li, O, and at least one element selected from Co, Fe, P, Ni, or Mn. In some embodiments of this application, the positive electrode active material may include a composite oxide, and the composite oxide contains lithium and at least one element selected from cobalt, manganese, and nickel. The specific types of the positive electrode active material are not subject to specific restrictions, and can be selected according to requirements. The positive electrode active material is selected from at least one of lithium cobalt oxide (LCO), lithium nickel cobalt manganate (NCM) ternary material, lithium iron phosphate, or lithium manganate oxide. One of these materials may be used alone, or any two or more of these materials may be used as a combination.

In some embodiments of this application, the positive electrode active material includes element M, and element M includes at least one of Al, Mg, Ti, Zr, Y, or La. In some embodiments of this application, based on a total mass of the positive electrode active material, a concentration of element M ranges from 200 ppm to 12000 ppm, for example, is 300 ppm, 500 ppm, 1000 ppm, 1500 ppm, 2000 ppm, 2500 ppm, 3000 ppm, 3500 ppm, 4000 ppm, 4500 ppm, 5000 ppm, 6000 ppm, 7000 ppm, 8000 ppm, 9000 ppm, 10000 ppm, or 11000 ppm, or in a range of any two of these values.

A specific surface area (BET for short) and a particle size of the positive electrode active material affect migration of lithium ions on a surface of the active material. A larger BET leads to a smaller particle size, which is beneficial to the migration of lithium ions. Fast migration characteristics of lithium ions will significantly improve the electrical performance of the electrochemical apparatus. According to some embodiments of this application, the BET of the positive electrode active material ranges from 0.1 $m^2/g$ to 0.3 $m^2/g$, for example, is 0.13 $m^2/g$, 0.15 $m^2/g$, 0.17 $m^2/g$, 0.19 $m^2/g$, 0.20 $m^2/g$, 0.21 $m^2/g$, 0.23 $m^2/g$, 0.25 $m^2/g$, 0.27 $m^2/g$, or 0.29 $m^2/g$, or in a range defined by any two of these values. According to some embodiments of this application, $D_v50$ of the positive electrode active material ranges from 10 μm to 30 μm, for example, is 12 μm, 14 μm, 16 μm, 18 μm, 20 μm, 22 μm, 24 μm, 26 μm, or 28 μm, or in a range defined by any

two of these values. The use of a positive electrode active material of a specified BET or $D_v50$ in combination with a specified solvent system can ensure energy density of the electrochemical apparatus, make the electrochemical apparatus have better transmission performance, and allow the electrochemical apparatus to maintain better floating charge performance under a high-temperature condition.

In this application, the positive electrode active material may have a coating on a surface, or may be mixed with another compound having a coating. The coating may include at least one compound of a coating element selected from oxides of the coating element, hydroxides of the coating element, oxyhydroxides of the coating element, oxycarbonates (oxycarbonate) of the coating element, and hydroxycarbonates (hydroxycarbonate) of the coating element. The compound used for the coating may be amorphous or crystalline. The coating element contained in the coating may include Mg, Al, Co, K, Na, Ca, Si, Ti, V, Sn, Ge, Ga, B, As, Zr, or a combination thereof. The coating can be applied by using any method as long as the method does not adversely affect the performance of the positive electrode active material. For example, the method may include any coating method well known to a person of ordinary skill in the art, such as spraying or dipping.

In some embodiments, the positive electrode active material layer further includes a binder, and optionally, further includes a conductive material, thereby imparting conductivity to the electrode. The binder enhances binding between particles of the positive electrode active material, and binding between the positive electrode active material and the current collector. Non-limiting examples of the binder include polyvinyl alcohol, hydroxypropyl cellulose, diacetyl cellulose, polyvinyl chloride, carboxylated polyvinyl chloride, polyvinyl fluoride, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, nylon, and the like. The conductive material may include any conductive material that causes no chemical change. Non-limiting examples of the positive electrode conductive material include a carbon-based material (for example, natural graphite, artificial graphite, carbon black, acetylene black, Ketjen black, and carbon fiber), a metal-based material (for example, metal powder, and metal fiber, including copper, nickel, aluminum, and silver), a conductive polymer (for example, a polyphenylene derivative), and a mixture thereof.

The positive electrode current collector used in the electrochemical apparatus according to this application may be, but is not limited to, aluminum (Al).

3. Negative electrode

The negative electrode of this application includes a current collector and a negative electrode active material layer provided on the current collector. According to some embodiments of this application, the negative electrode active material layer includes a negative electrode active material, and specific types of the negative electrode active material are not subject to specific restrictions, and can be selected according to requirements. Specifically, the negative electrode active material is selected from one or more of natural graphite, artificial graphite, mesocarbon microbeads (MCMB for short), hard carbon, soft carbon, silicon, a silicon-carbon composite, a Li-Sn alloy, a Li-Sn-O alloy, Sn, SnO, $SnO_2$, spinel-structure lithiated $TiO_2$-$Li_4Ti_5O1_2$, and a Li-Al alloy. Non-limiting examples of the carbon material include crystalline carbon, amorphous carbon, and a mixture thereof. The crystalline carbon may be amorphous, plate-shaped, flake-shaped, spherical or fiber-shaped natural graphite or artificial graphite. The amorphous carbon may be soft carbon, hard carbon, a mesophase pitch carbonization product, burnt coke, or the like.

In some embodiments, the negative active material layer may include a binder, and optionally, further includes a conductive material, thereby imparting conductivity to the electrode. The binder improves the binding of the negative active material particles with each other and the binding of the negative active material with the current collector. Non-limiting examples of the binder include polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, nylon, and the like. The conductive material may include any conductive material that causes no chemical change. Non-limiting examples of the positive electrode conductive material include a carbon-based material (for example, natural graphite, artificial graphite, carbon black, acetylene black, Ketjen black, and carbon fiber), a metal-based material (for example, metal powder, and metal fiber, including copper, nickel, aluminum, and silver), a conductive polymer (for example, a polyphenylene derivative), and a mixture thereof.

According to some embodiments, the current collector may be selected from copper foil, nickel foil, stainless steel foil, titanium foil, nickel foam, copper foam, a polymer substrate coated with conductive metal, and any combination thereof.

4. Separator

In some embodiments, the electrochemical apparatus according to this application has a separator provided

between the positive electrode and the negative electrode to prevent short circuits. The separator used in the electrochemical apparatus according to this application is not particularly limited to any material or shape, and may be based on any technology disclosed in the prior art. In some embodiments, the separator includes a polymer or an inorganic substance formed by a material stable to the electrolyte of this application.

For example, the separator may include a base material layer and a surface treatment layer. The base material layer is a non-woven fabric, membrane, or composite membrane having a porous structure, and a material of the base material layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the base material layer, and the surface treatment layer may be a polymer layer or an inorganic layer, or may be a layer formed by a mixed polymer and an inorganic substance.

The inorganic layer includes inorganic particles and a binder. The inorganic particles are selected from one or a combination of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from one or a combination of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene.

The polymer layer includes a polymer, and a material of the polymer is selected from at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

III. Electronic apparatus

This application further provides an electronic apparatus, including the electrochemical apparatus in the second aspect of this application.

The electronic device or apparatus in this application is not particularly limited. In some embodiments, the electronic device of this application includes, but is not limited to: a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

This application is further described with reference to Examples. It should be understood that these examples are merely used to describe this application but not to limit the scope of this application.

Preparation of an electrolyte

In an argon atmosphere glove box with a water content of less than 10 ppm, ethylene carbonate (EC for short), propylene carbonate (PC for short), ethyl propionate (EP for short), and propyl propionate (PP for short), and chain carbonate (ethylene carbonate, DEC for short, and fluoromethyl ethyl carbonate, FEMC for short) were added and mixed uniformly, and then a fully dried lithium salt $LiPF_6$ was dissolved in the foregoing resulting non-aqueous solvent. An added mass of $LiPF_6$ was 12% of a total mass of the electrolyte. Finally, the components shown in Examples and Comparative Examples in the following table were added and mixed evenly to obtain the electrolyte. The percentages of substances in the electrolyte described below were calculated based on the total mass of the electrolyte.

Examples of the sultone compound containing formula I are as follows:

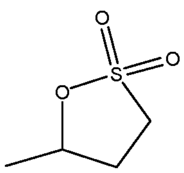 formula I-1, and 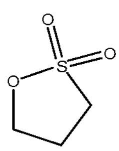 formula I-5.

Examples of the dinitrile compound: succinonitrile (SN for short) and ethylene glycol bis(propionitrile) ether (DENE for short).

Examples of the trinitrile compound: 1,3,6-hexanetrinitrile (HTCN for short), and 1,2,3-tris(2-cyanooxy)propane (TCEP for short).

Examples of the Boron-containing lithium salt: lithium oxalate borate (BOB for short) and lithium difluorooxalate borate (DFOB for short)

Examples of the sulfone compound:

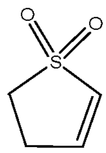 formula III-3 and 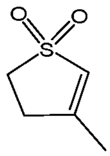 formula III-5.

Preparation of a lithium-ion battery

(1) Preparation of a positive electrode plate: A positive electrode active material lithium cobalt oxide (with a molecular formula of $LiCoO_2$), a conductive agent carbon black, and a binder polyvinylidene fluoride (PVDF for short) were fully stirred and mixed in an appropriate amount of N-methylpyrrolidone (NMP for short) solvent at a weight ratio of 96:2:2, to form a uniform positive electrode slurry; and the slurry was applied onto Al foil of a positive electrode current collector, followed by drying and cold pressing, to obtain the positive electrode plate, also called a positive electrode. Unless otherwise specified, Al contained in the positive electrode active material in the embodiment was 700 ppm.

(2) Preparation of a negative electrode plate: A negative electrode active material graphite, styrene-butadiene rubber (SBR for short), and sodium carboxymethyl cellulose (CMC for short) were fully stirred and mixed in an appropriate amount of deionized water solvent at a weight ratio of 97:2: 1, to form a uniform negative electrode slurry; and the slurry was applied onto Cu foil of a negative electrode current collector, followed by drying and cold pressing, to obtain the negative electrode plate, also called a negative electrode.

(3) Separator: APE porous polymer film was used as a separator.

(4) Preparation of a lithium-ion battery: The positive electrode plate, the separator, and the negative electrode plate were laminated in order, so that the separator was sandwiched between the positive electrode plate and the negative electrode plate for isolation, and then wound to obtain a bare battery. The bare battery was placed in outer packaging foil. The foregoing prepared electrolyte was injected into the dried battery to complete the preparation of the lithium-ion battery after processes such as vacuum packaging, standing, formation, and shaping.

Test I. Floating charge test process:

The battery was discharged to 3.0 V at 25°C at 0.5C, charged to 4.45 V at 0.5C, and charged to 0.05C at a constant voltage of 4.45 V A PPG soft-pack battery thickness gauge was used to test a thickness of the battery at this time that is recorded as a. The battery was placed in an oven at 45°C and stored at a constant voltage of 4.45 V at 45°C for 400 hours. A thickness after 400 hours of testing was recorded as b. The calculation formula for the thickness swelling ratio: $(b+a)/a\times 100\%$.

Test II: Cycling test process at 45°C:

The battery was discharged to 3.0 V at 0.5C at 45°C, and left standing for 5 minutes. Then the battery was charged to 4.45 V at 0.5C, and charged to 0.05C at a constant voltage of 4.45 V After charging, the battery was discharged to 3.0 V at a current of 0.5C. This is one cycle. According to this charging and discharging process, the battery was charged and discharged for 300 cycles at a temperature of 45°C. The capacity released in the first cycle was denoted as C1, and the capacity released in the $300^{th}$ cycle was denoted as C300. The calculation formula for the capacity retention rate is: $(C1/C300)\times 100\%$.

Test result

Table 1 shows the effects of the mass percentage a% of ethyl propionate (EP) in the electrolyte, the mass percentage b% of propyl propionate (PP) in the electrolyte, and the mass percentage c% of ethylene carbonate (EC) in the electrolyte, the mass percentage d% of propylene carbonate (PC) in the electrolyte, and the mass percentage e% of chain carbonate (DEC or FEMC) in the electrolyte on performance of the lithium-ion batteries. In Examples and

Comparative Examples shown in Table 1, $D_v50$ of the positive electrode active material was 16 μm, and BET was 0.19 $m^2/g$.

**Table 1**

| Example | a | b | a+b | Carbonate (e) | | c | d | c+d | c/d | Thickness swelling rate after 400 h at 45°C |
|---|---|---|---|---|---|---|---|---|---|---|
| | | | | DEC | FEMC | | | | | |
| Example 1.1 | 10 | 10 | 20 | 28 | - | 15 | 25 | 40 | 0.60 | 10.0% |
| Example 1.2 | 10 | 20 | 30 | 18 | - | 15 | 25 | 40 | 0.60 | 9.8% |
| Example 1.3 | 10 | 30 | 40 | 8 | - | 15 | 25 | 40 | 0.60 | 9.4% |
| Example 1.4 | 20 | 10 | 30 | 18 | - | 15 | 25 | 40 | 0.60 | 9.3% |
| Example 1.5 | 20 | 20 | 40 | 8 | - | 15 | 25 | 40 | 0.60 | 9.0% |
| Example 1.6 | 20 | 30 | 50 | 6 | - | 15 | 17 | 32 | 0.88 | 8.6% |
| Example 1.7 | 25 | 10 | 35 | 13 | - | 15 | 25 | 40 | 0.60 | 8.7% |
| Example 1.8 | 25 | 20 | 45 | 13 | - | 13 | 17 | 30 | 0.76 | 8.0% |
| Example 1.9 | 25 | 25 | 50 | 6 | - | 12 | 20 | 32 | 0.60 | 8.2% |
| Example 1.10 | 30 | 10 | 40 | 8 | - | 15 | 25 | 40 | 0.60 | 8.8% |
| Example 1.11 | 30 | 15 | 45 | 5 | - | 13 | 25 | 38 | 0.52 | 8.5% |
| Example 1.12 | 30 | 20 | 50 | 6 | - | 12 | 20 | 32 | 0.60 | 8.0% |
| Example 1.13 | 25 | 20 | 45 | 8 | - | 17 | 18 | 35 | 0.94 | 8.3% |
| Example 1.14 | 25 | 20 | 45 | 8 | - | 16 | 19 | 35 | 0.84 | 8.2% |
| Example 1.15 | 25 | 20 | 45 | 8 | - | 15 | 20 | 35 | 0.75 | 8.1% |
| Example 1.16 | 25 | 20 | 45 | 8 | - | 10 | 25 | 35 | 0.40 | 8.0% |
| Example 1.17 | 25 | 20 | 45 | 8 | - | 8 | 27 | 35 | 0.30 | 8.0% |
| Example 1.18 | 20 | 10 | 30 | - | 18 | 15 | 25 | 40 | 0.60 | 9.2% |
| Example 1.19 | 30 | 10 | 40 | - | 8 | 15 | 25 | 40 | 0.60 | 8.9% |
| Example 1.20 | 10 | 30 | 40 | - | 8 | 15 | 25 | 40 | 0.60 | 9.3% |
| Example 1.21 | 25 | 20 | 45 | - | 5 | 13 | 25 | 38 | 0.52 | 8.0% |
| Example 1.22 | 25 | 25 | 50 | - | 6 | 12 | 20 | 32 | 0.60 | 8.1% |
| Example 1.23 | 30 | 10 | 40 | - | 8 | 15 | 25 | 40 | 0.60 | 8.7% |
| Comparative Example 1.1 | 60 | - | 60 | - | - | 20 | 8 | 28 | 2.50 | 20.0% |
| Comparative Example 1.2 | 40 | 10 | 50 | 8 | - | 20 | 10 | 30 | 2.00 | 18.0% |
| Comparative Example 1.3 | 60 | - | 60 | 8 | - | 10 | 10 | 20 | 1.00 | 17.0% |
| Comparative Example 1.4 | 14 | 10 | 24 | 8 | - | 22 | 34 | 56 | 0.65 | 15.4% |

By comparing Example 1.1 to Example 1.12, it can be seen that increasing the amount of carboxylic ester significantly improved the floating charge of the battery at 45°C. On the one hand, this is because carboxylic ester has low viscosity, which will improve kinetic performance of the electrolyte and reduce lithium precipitation at the negative electrode of the battery. On the other hand, because ccarboxylic ester will have side reactions at the positive electrode in the floating charge process, some by-products will be produced, thereby protecting the positive electrode interface and reducing further reactions between the positive electrode interface and other components in the electrolyte. Compared with Comparative Example 1.1, it can be seen that after the amount of carboxylic ester exceeded 50%, the side reactions between carboxylic acid ester and the surface of the active material were accelerated, deteriorating the performance.

It can be seen from Example 1.1 to Example 1.12 and Example 1.18 to Example 1.23 that properly adjusting the amount of chain carbonate could alleviate the side reactions between carboxylic ester and the positive electrode interface to some extent and reduce the battery flatulence and excessive floating charge caused by the continuous increase of interface side reactions. By comparing with Comparative Example 1.1 and Comparative Example 1.2, it can also be seen that an appropriate increase of chain carbonate improved the floating charge performance of the battery to some extent.

It can be seen from the comparison of Examples that, based on the appropriate amount of carboxylic ester and chain carbonate, the floating charge performance of the battery could be improved when the ratio of EC to PC was less than 1. This is mainly because compared with propylene carbonate, ethylene carbonate has lower tolerance to high pressure. Over time as the battery was under persistent high voltage, ethylene carbonate was prone to decomposition reaction and high-temperature gas production, which in turn caused the swelling rate of the battery to exceed a standard value. Compared with Comparative Example 1.1 and Comparative Example 1.2, it can be seen that the floating charge of the battery deteriorated significantly when the percentage of ethylene carbonate exceeded that of propylene carbonate.

Table 2 shows effects of the mass percentage of fluoroethylene carbonate (FEC) in the electrolyte, the type of sultone compound, and the mass percentage of sultone compound in the electrolyte on performance of the lithium-ion batteries. The examples are further improved based on Example 1.8, that is, the difference lies only in the parameters in Table 2.

**Table 2**

| Example | a | b | e | c | d | FEC percentage (%) | Sultone percentage (%) | | Thickness swelling rate after 400 h at 45°C | Capacity retention rate after 300 cycles at 45°C |
|---|---|---|---|---|---|---|---|---|---|---|
| | | | | | | | Formula I-1 | Formula I-5 | | |

| Example | a | b | e | c | d | FEC percentage (%) | Sultone percentage (%) | | Thickness swelling rate after 400 h at 45°C | Capacity retention rate after 300 cycles at 45°C |
|---|---|---|---|---|---|---|---|---|---|---|
| | | | | | | | Formula I-1 | Formula I-5 | | |
| Example 1.8 | 25.0 | 20.0 | 13.0 | 13.0 | 17.0 | - | - | - | 8.0% | 85.20% |
| Example 2.1 | 24.4 | 19.5 | 12.7 | 12.7 | 16.6 | 2 | - | - | 8.1% | 86.10% |
| Example 2.2 | 24.1 | 19.3 | 12.6 | 12.6 | 16.4 | 3 | - | - | 7.9% | 87.10% |
| Example 2.3 | 23.9 | 19.1 | 12.4 | 12.4 | 16.2 | 4 | - | - | 8.0% | 88.20% |
| Example 2.4 | 23.6 | 18.9 | 12.3 | 12.3 | 16.0 | 5 | - | - | 8.1% | 89.30% |
| Example 2.5 | 23.0 | 18.4 | 12.0 | 12.0 | 15.6 | 7 | - | - | 8.1% | 90.10% |
| Example 2.6 | 22.4 | 18.0 | 11.7 | 11.7 | 15.3 | 9 | - | - | 8.2% | 91.00% |
| Example 2.7 | 24.7 | 19.8 | 12.9 | 12.9 | 16.8 | - | 1 | - | 7.9% | 85.50% |
| Example 2.8 | 24.4 | 19.5 | 12.7 | 12.7 | 16.6 | - | 2 | - | 7.8% | 86.50% |
| Example 2.9 | 24.1 | 19.3 | 12.6 | 12.6 | 16.4 | - | 3 | - | 7.8% | 87.50% |
| Example 2.10 | 23.6 | 18.9 | 12.3 | 12.3 | 16.0 | - | 5 | - | 7.7% | 88.90% |
| Example 2.11 | 24.7 | 19.8 | 12.9 | 12.9 | 16.8 | - | - | 1 | 8.0% | 85.70% |
| Example 2.12 | 24.4 | 19.5 | 12.7 | 12.7 | 16.6 | - | - | 2 | 7.9% | 86.40% |
| Example 2.13 | 24.1 | 19.3 | 12.6 | 12.6 | 16.4 | - | - | 3 | 7.8% | 87.40% |

| Example | a | b | e | c | d | FEC percentage (%) | Sultone percentage (%) | |  Thickness swelling rate after 400 h at 45°C | Capacity retention rate after 300 cycles at 45°C |
|---|---|---|---|---|---|---|---|---|---|---|
| | | | | | | | Formula I-1 | Formula I-5 | | |
| Example 2.14 | 22.7 | 18.2 | 11.8 | 11.8 | 15.5 | 5 | - | 3 | 7.8% | 91.20% |
| Example 2.15 | 22.7 | 18.2 | 11.8 | 11.8 | 15.5 | 4 | 4 | - | 8.0% | 89.10% |
| Example 2.16 | 23.0 | 18.4 | 12.0 | 12.0 | 15.6 | 5 | 2 | - | 7.8% | 92.1% |
| Example 2.17 | 22.0 | 17.4 | 11.0 | 11.0 | 15.6 | 8 | 3 | | 8.2% | 91.8% |

By comparing Example 1.8 and Example 2.1 to Example 2.6, it can be seen that FEC significantly improved the 45°C cycling performance of the battery. This is mainly because the combination of ethyl propionate, propyl propionate, ethylene carbonate, propylene carbonate, and FEC in a specific content range and ratio relationship could achieve a good film-forming effect and reduce the catalytic side reactions between the electrolyte and the active material, thereby reducing consumption of the electrolyte. By comparing Example 1.8 and Example 2.7 to Example 2.13, it can be seen that the addition of sultone could further improve the cycling performance of the battery at 45°C, and enhance the floating charge performance of the battery at 45°C to some extent. This is mainly because after sultone formed into a film, the organic protective film contained a specific amount of element S, and the S-containing organic protective film was more tolerable to high temperature and high voltage. Further, it can be seen from Examples 2.14 to 2.17 that the combination of FEC and sultone could further improve the cycling performance of the battery.

Table 3 shows effects of the type of multi-nitrile compound, and the mass percentage of multi-nitrile compound in the electrolyte on performance of the lithium-ion batteries. The examples are further improved based on Example 1.8, that is, the difference lies only in the parameters in Table 3.

**Table 3.1**

| Example | a | b | e | c | d | Dinitrile percentage (%) | | Trinitrile percentage (%) | | Thickness swelling rate after 400 h at 45°C |
|---|---|---|---|---|---|---|---|---|---|---|
| | | | | | | SN | DENE | HTCN | TCEP | |
| Example 1.8 | 25.0 | 20.0 | 13.0 | 13.0 | 17.0 | - | - | - | - | 8.0% |
| Example 3.1 | 24.5 | 19.5 | 12.7 | 12.7 | 16.6 | 2 | - | - | - | 7.7% |
| Example 3.2 | 24.1 | 19.3 | 12.6 | | 12.6 ǀ 16.4 | 3 | - | - | - | 6.5% |
| Example 3.3 | 23.5 | 18.9 | 12.3 | 12.3 | 16.0 | 5 | - | - | - | 5.9% |

(continued)

| Example | a | b | e | c | d | Dinitrile percentage (%) | | Trinitrile percentage (%) | | Thickness swelling rate after 400 h at 45°C |
|---|---|---|---|---|---|---|---|---|---|---|
| | | | | | | SN | DENE | HTCN | TCEP | |
| Example 3.4 | 22.5 | 17.9 | 12.3 | 12.3 | 16.0 | 7 | - | - | - | 6.4% |
| Example 3.5 | 24.6 | 19.8 | 12.9 | 12.9 | 16.8 | - | 1 | - | - | 7.8% |
| Example 3.6 | 24.5 | 19.5 | 12.7 | 12.7 | 16.6 | - | 2 | - | - | 6.4% |
| Example 3.7 | 24.1 | 19.3 | 12.6 | 12.6 | 16.4 | - | 3 | - | - | 6.1% |
| Example 3.8 | 24.9 | 19.9 | 12.9 | 12.9 | 16.9 | - | - | 0.5 | - | 7.5% |
| Example 3.9 | 24.6 | 19.8 | 12.9 | 12.9 | 16.8 | - | - | 1 | - | 7.0% |
| Example 3.10 | 24.5 | 19.5 | 12.7 | 12.7 | 16.6 | - | - | 2 | - | 6.1% |
| Example 3.11 | 24.1 | 19.3 | 12.6 | 12.6 | 16.4 | - | - | 3 | - | 5.8% |
| Example 3.12 | 24.9 | 19.9 | 12.9 | 12.9 | 16.9 | - | - | - | 0.5 | 7.8% |
| Example 3.13 | 24.6 | 19.8 | 12.9 | 12.9 | , 16.8 | - | - | - | 1 | 7.2% |
| Example 3.14 | 24.5 | 19.5 | 12.7 | 12.7 | 16.6 | - | - | - | 2 | 6.5% |
| Example 3.15 | 24.1 | 19.3 | 12.6 | 12.6 | 16.4 | - | - | - | 3 | 6.2% |
| Example 3.16 | 24.1 | 19.3 | 12.6 | 12.6 | 16.4 | 2 | 0.5 | 0.5 | - | 5.3% |
| Example 3.17 | 24.1 | 19.3 | 12.6 | 12.6 | 16.4 | 2 | - | 1 | - | 5.7% |
| Example 3.18 | 23.1 | 19.3 | 12.6 | 12.6 | 16.4 | 2.5 | 0.5 | 1 | - | 5.0% |
| Example 3.19 | 22.5 | 17.9 | 12.3 | 12.3 | 16.0 | 5 | 0.5 | 1.5 | - | 6.1% |

By comparing Example 1.8 and Example 3.1 to Example 3.7, it can be seen that the 45°C floating charge performance of the battery was significantly improved after dinitrile was added. By comparing Example 1.8 and Example 3.8 to Example 3.15, it can be seen that the floating charge performance of the battery was also significantly improved after trinitrile was added. It can be seen from Example 3.16 to Example 3.19 that the floating charge performance of the battery was further improved after dinitrile and trinitrile were added. This is mainly because nitriles have electron-rich groups, which alleviate the catalytic oxidation effect of the transition metal at the positive electrode on the electrolyte to some extent.

**Table 3.2**

| Example | a | b | e | c | d | FEC percentage (%) | Sultone formula I-5 percentage (%) | SN percentage (%) | Trinitrile percentage (%) | | Thickness swelling rate after 400 h at 45°C | Capacity retention rate after 300 cycles at 45°C |
|---|---|---|---|---|---|---|---|---|---|---|---|---|
| | | | | | | | | | HTCN | TCEP | | |
| Example 1.8 | 25.0 | 20.0 | 13.0 | 13.0 | 17.0 | - | - | - | - | - | 8.0% | 85.20% |
| Example 3.20 | 21.88 | 17.50 | 11.38 | 11.38 | 14.88 | 5.00 | 3.00 | 3.00 | - | - | 6.4% | 90.50% |
| Example 3.21 | 21.31 | 17.05 | 11.08 | 11.08 | 14.49 | 5.00 | 3.00 | 3.00 | 2.00 | - | 4.5% | 91.20% |
| Example 3.22 | 21.31 | 17.05 | 11.08 | 11.08 | 14.49 | 5.00 | 3.00 | 3.00 | 1.00 | 1.00 | 4.6% | 92.00% |

It can be seen from Table 3.2 that nitriles could further improve the cycling performance of the battery on the basis of fluoroethylene carbonate and sultone. This is mainly because the nitriles provide effective protection for the transition metal at the positive electrode interface.

Table 4 shows effects of the type of boron-containing lithium salt, and the mass percentage of the boron-containing lithium salt in the electrolyte on performance of the lithium-ion batteries. The examples are further improved based on Example 1.8, that is, the difference lies only in the parameters in Table 4.

**Table 4.1**

| Example | a | b | e | c | d | Boron-containing lithium salt percentage (%) | | Thickness swelling rate after 400 h at 45°C | Capacity retention rate after 300 cycles at 45°C |
|---|---|---|---|---|---|---|---|---|---|
| | | | | | | BOB | DFOB | | |
| Example 1.8 | 25.00 | 20.00 | 13.00 | 13.00 | 17.00 | - | - | 8.0% | 85.20% |
| Example 4.1 | 24.97 | 19.98 | 12.99 | 12.99 | 16.98 | 0.1 | - | 8.1% | 86.10% |
| Example 4.2 | 24.94 | 19.95 | 12.97 | 12.97 | 16.96 | 0.2 | - | 8.1% | 88.20% |
| Example 4.3 | 24.89 | 19.91 | 12.94 | 12.94 | 16.92 | 0.4 | - | 8.2% | 90.10% |
| Example 4.4 | 24.80 | 19.84 | 12.90 | 12.90 | 16.86 | 0.7 | - | 8.3% | 92.10% |
| Example 4.5 | 24.60 | 19.84 | 12.90 | 12.90 | 16.86 | 0.9 | - | 8.5% | 89.70% |
| Example 4.6 | 24.50 | 19.84 | 12.90 | 12.90 | 16.86 | 1.0 | - | 8.6% | 88.10% |

| Example | a | b | e | c | d | Boron-containing lithium salt percentage (%) | | Thickness swelling rate after 400 h at 45°C | Capacity retention rate after 300 cycles at 45°C |
|---|---|---|---|---|---|---|---|---|---|
| | | | | | | BOB | DFOB | | |
| Example 4.7 | 24.97 | 19.98 | 12.99 | 12.99 | 16.98 | - | 0.1 | 8.0% | 86.00% |
| Example 4.8 | 24.94 | 19.95 | 12.97 | 12.97 | 16.96 | - | 0.2 | 8.1% | 87.20% |
| Example 4.9 | 24.89 | 19.91 | 12.94 | 12.94 | 16.92 | - | 0.4 | 8.2% | 88.80% |
| Example 4.10 | 24.80 | 19.84 | 12.90 | 12.90 | 16.86 | - | 0.7 | 8.3% | 91.00% |

**Table 4.2**

| Example | a | b | e | c | d | FEC percentage (%) | Sultone percentage (%) | Dinitrile percentage (%) | Trinitrile percentage (%) | Boron-containing lithium salt percentage (%) | Thickness swelling rate after 400 h at 45°C | Retention rate after 300 cycles at 45°C |
|---|---|---|---|---|---|---|---|---|---|---|---|---|
| | | | | | | | Formula I-5 | SN | HTCN | BOB | | |
| Example 4.11 | 21.82 | 17.45 | 11.35 | 11.35 | 14.84 | 5 | 3 | 3 | - | 0.2 | 6.40% | 93.20% |
| Example 4.12 | 21.25 | 17.00 | 11.05 | 11.05 | 14.45 | 5 | 3 | 3 | 2 | 0.2 | 4.60% | 94.00% |

By comparing Example 1.8 and Example 4.1 to Example 4.10, it can be seen that cycling performance of the battery was significantly improved after the boron-containing lithium salt was added. This indicates that the boron-containing lithium salt has a significant effect on reducing the interface side reactions during cycling. It can be seen from Example 4.11 and Example 4.12 that the boron-containing lithium salt in combination with FEC, sultones, and nitriles could further improve the cycling performance of the battery.

Table 5 shows effects of the type of alkenyl sulfone compound, and the mass percentage of alkenyl sulfone compound in the electrolyte on performance of the lithium-ion batteries. The examples are further improved based on Example 1.8, that is, the difference lies only in the parameters in Table 5.

**Table 5.1**

| Example | a | b | e | c | d | Alkenyl sulfone percentage (%) | | Thickness swelling rate after 400 h at 45°C |
|---|---|---|---|---|---|---|---|---|
| | | | | | | III-3 | III-5 | |
| Example 1.8 | 25.00 | 20.00 | 13.00 | 13.00 | 17.00 | - | - | 8.00% |
| Example 5.1 | 24.86 | 19.89 | 12.93 | 12.93 | 16.90 | 0.5 | - | 7.50% |
| Example 5.2 | 24.72 | 19.77 | 12.85 | 12.85 | 16.81 | 1 | - | 7.00% |
| Example 5.3 | 24.15 | 19.32 | 12.56 | 12.56 | 16.42 | 3 | - | 6.00% |
| Example 5.4 | 23.58 | 18.86 | 12.26 | 12.26 | 16.03 | 5 | - | 5.50% |
| Example 5.5 | 22.58 | 17.86 | 12.26 | 12.26 | 16.03 | 7 | - | 6.3% |
| Example 5.6 | 24.72 | 19.77 | 12.85 | 12.85 | 16.81 | - | 1 | 6.80% |

| Example | a | b | e | c | d | Alkenyl sulfone percentage (%) | | Thickness swelling rate after 400 h at 45°C |
|---|---|---|---|---|---|---|---|---|
| | | | | | | III-3 | III-5 | |
| Example 5.7 | 24.15 | 19.32 | 12.56 | 12.56 | 16.42 | - | 3 | 5.50% |
| Example 5.8 | 23.58 | 18.86 | 12.26 | 12.26 | 16.03 | - | 5 | 5.20% |

**Table 5.2**

| Example | a | b | e | c | d | FEC | Sultone percentage (%) | Dinitrile percentage(%) | Trinitrile percentage (%) | Boron-containing lithium salt percentage (%) | | Alkenyl sulfone percentage (%) | Thickness swelling rate after 400 h at 45°C | Capacity retention rate after 300 cycles at 45°C |
|---|---|---|---|---|---|---|---|---|---|---|---|---|---|---|
| | | | | | | | Formula I-5 | SN | HTCN | BOB | DFOB | III-3 | | |
| Example 5.9 | 21.59 | 17.27 | 11.23 | 11.23 | 14.68 | 5 | 3 | 3 | - | - | - | 1 | 5.50% | 91.50% |
| Example 5.10 | 21.02 | 16.82 | 10.93 | 10.93 | 14.30 | 5 | 3 | 3 | 2 | - | - | 1 | 4.00% | 92.10% |
| Example 5.11 | 21.53 | 17.23 | 11.20 | 11.20 | 14.64 | 5 | 3 | 3 | - | 0.2 | - | 1 | 5.60% | 94.00% |
| Example 5.12 | 20.97 | 16.77 | 10.90 | 10.90 | 14.26 | 5 | 3 | 3 | 2 | - | 0.2 | 1 | 4.10% | 93.00% |

By comparing Example 1.8 and Example 5.1 to Example 5.7, it can be seen that the floating charge performance of the battery was significantly improved after alkenyl sulfone was added. It can be seen from Example 5.9 to Example 5.12 that alkenyl sulfone used in combination with other additives also had a better improvement effect.

Table 6 shows effects of BET and $D_v50$ of the positive electrode active material and doping elements on performance of the lithium-ion batteries. In Example 7.1 to Example 7.11, based on the total mass of the electrolyte, components contained in the electrolyte are shown in Table 6 below. Unless otherwise specified, Al contained in the positive electrode active material in the embodiment was 700 ppm, BET was 0.19 $m^2/g$, and $D_v50$ was 16 $\mu m$.

**Table 6**

| Example | a | b | e | c | d | FEC percentage (%) | Sultone percentage (%) | Dinitrile percentage (%) | Trinitrile percentage (%) | Boron-containing lithium salt percentage (%) | Alkenyl sulfone percentage (%) |
|---|---|---|---|---|---|---|---|---|---|---|---|
| | | | | | | | Formula I-5 | SN | HTCN | BOB | III-3 |
| Example 7.1-7.10 | 21.31 | 17.05 | 11.08 | 11.08 | 14.49 | 5 | 3 | 3 | 2 | - | - |
| Example 7.11 | 20.97 | 16.77 | 10.90 | 10.90 | 14.26 | 5 | 3 | 3 | 2 | 0.2 | 1 |

**Table 7**

| Example | Positive electrode characteristics | | | Thickness swelling rate after 400 h at 45°C |
|---|---|---|---|---|
| | Al (ppm) | BET ($m^2/g$) | $D_v50$ (μm) | |
| Example 7.1 | 1000 | 0.19 | 16 | 4.5% |
| Example 7.2 | 3000 | 0.19 | 16 | 4.0% |
| Example 7.3 | 5000 | 0.19 | 16 | 3.8% |
| Example 7.4 | 700 | 0.1 | 16 | 4.0% |
| Example 7.5 | 700 | 0.15 | 16 | 4.3% |
| Example 7.6 | 700 | 0.2 | 16 | 5.0% |
| Example 7.7 | 700 | 0.25 | 16 | 5.5% |
| Example 7.8 | 700 | 0.19 | 15 | 5.0% |
| Example 7.9 | 700 | 0.19 | 20 | 4.5% |
| Example 7.10 | 700 | 0.19 | 25 | 4.0% |
| Example 7.11 | 3000 | 0.2 | 20 | 3.0% |

By comparing Example 7.1 to Example 7.11, it can be seen that Al doping and appropriate BET and $D_v50$ significantly improved the floating charge performance of the battery at 45°C.

Although some example embodiments of this application have been illustrated and described, this application is not limited to the disclosed embodiments. On the contrary, a person of ordinary skill in the art will recognize that some modifications and changes can be made to the embodiments without departing from the spirit and scope of this application described in the appended claims.

## Claims

1. An electrolyte, comprising ethyl propionate, propyl propionate, ethylene carbonate, and propylene carbonate, wherein based on a total mass of the electrolyte, a mass percentage of ethyl propionate is a%, a mass percentage of propyl propionate is b%, a mass percentage of ethylene carbonate is c%, and a mass percentage of propylene carbonate is d%, wherein $20 \leq a+b \leq 50$, $0<c/d<1$, and $15 \leq c+d \leq 50$.

2. The electrolyte according to claim 1, wherein $30 \leq a+b \leq 50$, and $0.1<c/d<0.8$.

3. The electrolyte according to claim 1, further comprising chain carbonate, wherein based on the total mass of the electrolyte, a mass percentage of chain carbonate is e%, wherein $5 \leq e \leq 30$.

4. The electrolyte according to claim 1, further comprising fluoroethylene carbonate, wherein based on the total mass of the electrolyte, a mass percentage of fluoroethylene carbonate ranges from 0.01% to 15%.

5. The electrolyte according to claim 1, further comprising a sultone compound, wherein the sultone compound satisfies at least one of conditions (1) to (3):

   (1) a mass percentage of the sultone compound in the electrolyte ranges from 0.01% to 10%;
   (2) the sultone compound comprises a compound of formula I:

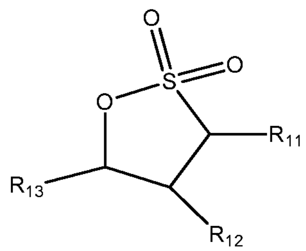

formula I

wherein $R_{11}$, $R_{12}$, and $R_{13}$ are each independently selected from hydrogen, halogen, hydrocarbyl, or halogen-containing hydrocarbyl; and

(3) the sultone compound comprises: at least one of

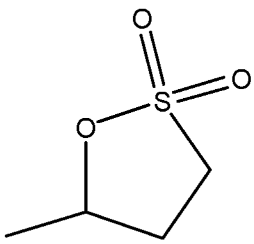

(formula I-1),

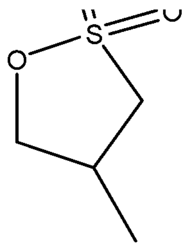

(formula I-2),

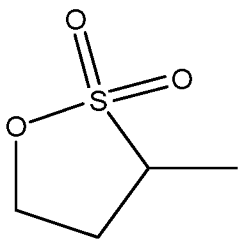

(formula I-3),

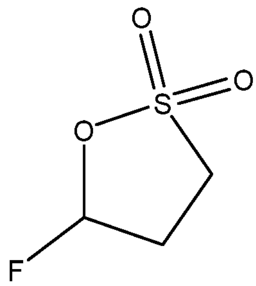

(formula I-4),

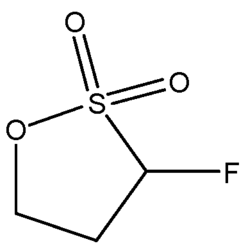

(formula I-5), or

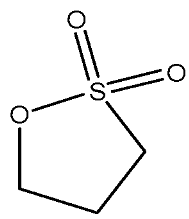

(formula I-6).

**6.** The electrolyte according to claim 1, further comprising fluoroethylene carbonate and a sultone compound, wherein based on the total mass of the electrolyte, a mass percentage of fluoroethylene carbonate is $W_1$%, a mass percentage of the sultone compound is $W_2$%, and $W_1$ and $W_2$ satisfy at least one of conditions (i) to (iii):

(i)

$$0.01 \leq W_1 \leq 15, \text{ and } 0.01 \leq W_2 \leq 10;$$

(ii)

$$2 \leq W_1 + W_2 \leq 15;$$

and
(iii)

$$1<W_1/W_2\leq 15.$$

**7.** The electrolyte according to claim 1, further comprising a multi-nitrile compound, wherein the multi-nitrile compound satisfies at least one of conditions (4) and (5):

(4) a mass percentage of the multi-nitrile compound in the electrolyte ranges from 0.001% to 10%; and
(5) the multi-nitrile compound comprises a dinitrile compound and a trinitrile compound, wherein based on the total mass of the electrolyte, a mass percentage of the dinitrile compound is $W_3$%, and a mass percentage of the trinitrile compound is $W_4$%, wherein $2\leq W_3+W_4\leq 9$ and/or $1<W_3/W_4\leq 15$.

**8.** The electrolyte according to claim 7, wherein the multi-nitrile compound comprises at least one of malononitrile, succinonitrile, glutaronitrile, adiponitrile, pimelic nitrile, 1,4-dicyano-2-butene, ethylene glycol bis(propionitrile) ether,

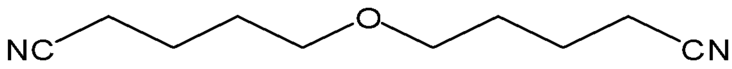 (formula II-1),

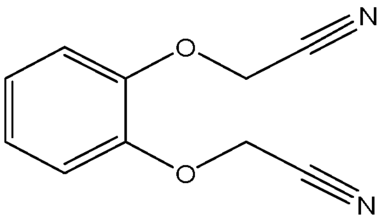 (formula II-2),

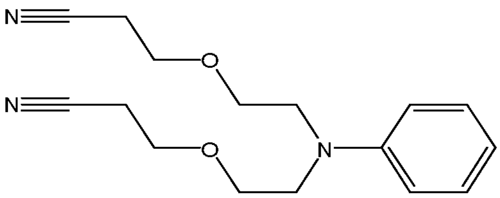 (formula II-3),

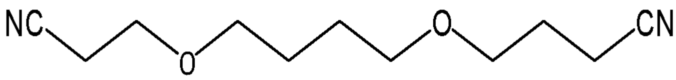 (formula II-4),

1,3,6-hexane trinitrile, 1,2,3-malononitrile, 3,3'-[[2-[(2-cyanoethoxy)methyl]-2-ethyl-1,3-propanediyl]bis(oxy)]bis-propionitrile, 2,2,2-azatriacetonitrile, ethylene-1,1,2-tricarbonitrile, tris(2-cyanoethyl)amine, tris(2-cyanoethyl)phosphine, or 1,2,3-tris(2-cyanooxy)propane.

**9.** The electrolyte according to claim 1, further comprising a boron-containing lithium salt, wherein the boron-containing lithium salt satisfies at least one of conditions (6) and (7):

(6) a mass percentage of the boron-containing lithium salt in the electrolyte ranges from 0.01% to 1%; and
(7) the boron-containing lithium salt comprises at least one of lithium oxalate borate, lithium difluorooxalate borate, lithium tetrafluoroborate, or lithium borate.

**10.** The electrolyte according to claim 1, further comprising an alkenyl sulfone compound, wherein the alkenyl sulfone compound satisfies at least one of conditions (8) to (10):

(8) a mass percentage of the alkenyl sulfone compound in the electrolyte ranges from 0.001% to 5%;
(9) the alkenyl sulfone compound comprises a compound of formula III:

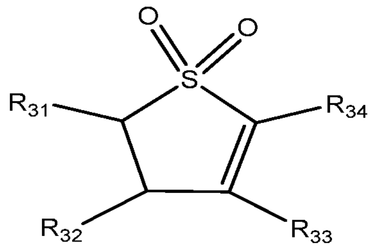

formula III,

wherein $R_{31}$, $R_{32}$, $R_{33}$, and $R_{34}$ are each independently selected from hydrogen, halogen, hydrocarbyl, or halogen-containing hydrocarbyl; and

(10) the alkenyl sulfone compound comprises at least one of

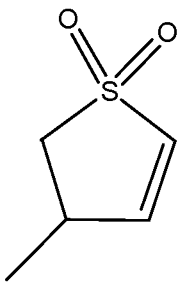

formula III-1,

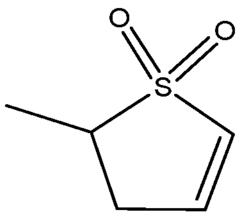

formula III-2,

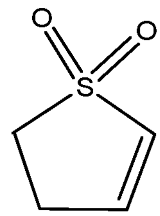

formula III-3,

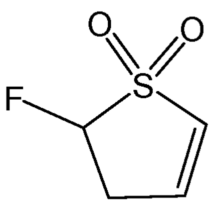

formula III-4,

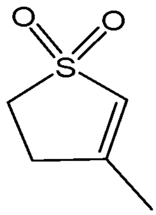

formula III-5, or

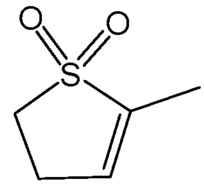

formula III-6.

**11.** An electrochemical apparatus, comprising a positive electrode, a negative electrode, a separator, and the electrolyte according to any one of claims 1 to 8.

**12.** The electrochemical apparatus according to claim 11, wherein the positive electrode comprises a positive electrode active material, and the positive electrode active material satisfies at least one of conditions (11) to (14):

(11) the positive electrode active material comprises Li, O, and at least one element selected from Co, Fe, P, Ni, or Mn;

(12) the positive electrode active material comprises element M, element M comprises at least one of Al, Mg, Ti, Zr, Y, or La, and based on a total mass of the positive electrode active material, a concentration of element M ranges from 200 ppm to 12000 ppm;

(13) BET of the positive electrode active material ranges from 0.1 $m^2/g$ to 0.3 $m^2/g$; and

(14) $D_v50$ of the positive electrode active material ranges from 10 $\mu m$ to 30 $\mu m$.

**13.** An electronic apparatus, comprising the electrochemical apparatus according to claim 11 or 12.

**INTERNATIONAL SEARCH REPORT**

International application No. **PCT/CN2021/126575**

**A. CLASSIFICATION OF SUBJECT MATTER**

H01M 10/0567(2010.01)i; H01M 10/0525(2010.01)i; H01M 4/485(2010.01)i; H01M 4/505(2010.01)i; H01M 4/525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPABSC; CNTXT; CNABS; CNKI; WPABS; ENTXT; CJFD; ENTXTC; VEN: 电解质, 电解液, 碳酸丙烯酯, 碳酸乙烯酯, 丙酸乙酯, 丙酸丙酯, 烯基砜, 腈, electrolyt+, carbonic w allyl w ester, PC, ethylene w carbonate, EC, ethyl w propionate, EP, propyl w propionate, PP, vinyl w sulfone, nitrile

**C. DOCUMENTS CONSIDERED TO BE RELEVANT**

| Category* | Citation of document, with indication, where appropriate, of the relevant passages | Relevant to claim No. |
|---|---|---|
| PX | CN 113206296 A (NINGDE AMPEREX TECHNOLOGY LTD.) 03 August 2021 (2021-08-03)<br>description, paragraphs 27-106 | 1-13 |
| X | CN 112467220 A (ZHUHAI COSMX BATTERY CO., LTD.) 09 March 2021 (2021-03-09)<br>description, paragraphs 2 and 5-74, and table 1 | 1, 2, 4-9, 11-13 |
| Y | CN 112467220 A (ZHUHAI COSMX BATTERY CO., LTD.) 09 March 2021 (2021-03-09)<br>description, paragraphs 2 and 5-74, and table 1 | 3, 5, 7, 8, 10-13 |
| Y | CN 109301326 A (NINGDE AMPEREX TECHNOLOGY LTD.) 01 February 2019 (2019-02-01)<br>description, paragraphs 37-107 | 3, 5, 7, 8, 10-13 |

☐ Further documents are listed in the continuation of Box C.  ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **06 January 2022** | **24 February 2022** |
| Name and mailing address of the ISA/CN<br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/126575**

| Patent document cited in search report | | | Publication date (day/month/year) | Patent family member(s) | | | Publication date (day/month/year) |
|---|---|---|---|---|---|---|---|
| CN | 113206296 | A | 03 August 2021 | None | | | |
| CN | 112467220 | A | 09 March 2021 | None | | | |
| CN | 109301326 | A | 01 February 2019 | US | 2021028490 | A1 | 28 January 2021 |
| | | | | EP | 3907801 | A1 | 10 November 2021 |
| | | | | EP | 3907801 | A4 | 10 November 2021 |
| | | | | US | 2020099098 | A1 | 26 March 2020 |
| | | | | US | 10833363 | B2 | 10 November 2020 |
| | | | | US | 2021028489 | A1 | 28 January 2021 |
| | | | | EP | 3627606 | A1 | 25 March 2020 |
| | | | | EP | 3627606 | B1 | 13 October 2021 |
| | | | | EP | 3910714 | A1 | 17 November 2021 |
| | | | | EP | 3910714 | A4 | 17 November 2021 |
| | | | | CN | 109301326 | B | 27 November 2020 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202110483270